# EUROPÄISCHE PATENTSCHRIFT

(11) **EP 2 450 634 B1**
(45) Veröffentlichungstag und Bekanntmachung des Hinweises auf die Patenterteilung: **12.02.2020**
(21) Anmeldenummer: 11186614.1
(22) Anmeldetag: 26.10.2011
(51) Int. Cl.: F24C 15/20, B01D 46/00

(54) **Anordnung mit einem Filter und einer Kapazitätsmesseinrichtung**
System comprising a filter and a capacity measuring device
Système comprenant une filtre et un dispositif de métrage de capacité

(30) Priorität: 08.11.2010 DE 102010043538
(43) Veröffentlichungstag der Anmeldung: 09.05.2012
(73) Patentinhaber: BSH Hausgeräte GmbH, 81739 München (DE)
(72) Erfinder: Bind, Boris, 74257 Untereisesheim (DE); Drechsler, Sandra, 76131 Karlsruhe (DE); Engelhardt, Christoph, 55126 Mainz (DE); Gmelin, Alexis, 79252 Stegen (DE); Hammer, Martin R., 67246 Dirmstein (DE); Pinner, Tobias, 57234 Wilnsdorf (DE)

(56) Entgegenhaltungen:
- EP-A1- 2 561 736
- DE-A1-102005 020 321
- DE-A1-102007 016 542
- FR-A5- 2 127 170
- US-A- 4 400 971

## Beschreibung

### Technisches Gebiet

Die Erfindung betrifft ein Filter mit einer Auswertevorrichtung, die insbesondere für eine Dunstabzugsvorrichtung dient. Speziell betrifft die Erfindung das Gebiet der Dunstabzugsvorrichtungen für Elektroherde oder gasbetriebene Herde, wie sie beispielsweise in Privathaushalten zum Einsatz kommen.

### Stand der Technik

Aus der EP 0 094 360 A1 ist eine Dunstabzugshaube bekannt. Die bekannte Dunstabzugshaube ist mit einer Anzeige versehen, die anzeigt, ob ein Filter gereinigt werden muss. Hierfür wird die Entladung einer elektrischen Zelle genutzt, die entsprechend dem Strombedarf eines Ventilators entladen wird. Wenn der Ventilator mit der höchsten Leistung arbeitet, dann ergibt sich ein hoher Motorstrom und die Anzeige wird beispielsweise nach 30 Stunden ausgegeben. Wenn der Ventilator mit halber Leistung arbeitet, dann wird die Anzeige beispielsweise nach 50 Stunden ausgegeben. Wenn der Ventilator mit niedrigster Umdrehung arbeitet, dann zählt diese Betriebszeit nicht, da hierbei keine Verschmutzung des Filters erfolgt. Durch die Entladung der elektrischen Zelle in Abhängigkeit vom Motorstrom des Ventilators kann somit eine verschmutzungsabhängige Anzeige erfolgen, wann das Filter auszuwechseln ist. Durch Knopfdruck kann die elektrische Zelle zu Beginn für vier bis fünf Minuten mit einigen Milliampere geladen werden. Bei entladener elektrischer Zelle wird durch Licht signalisiert, dass das Filter zu reinigen ist.

Die aus der EP 0 094 360 A1 bekannte Dunstabzugshaube hat den Nachteil, dass die Vorrichtung nach jedem Filterwechsel neu zu aktivieren ist. Vergisst der Benutzer die Aktivierung oder erfolgt diese erst zu einem späteren Zeitpunkt, dann erfolgt auch die Anzeige für den Filterwechsel zu spät. Bei einem reinigbaren Filter besteht außerdem ein Problem, wenn die Verschmutzungen durch die Reinigung nur teilweise entfernt worden sind. Wegen der am Anfang bereits bestehenden Restverschmutzung ist dann die Betriebszeit bis zum erneuten Wechsel zu lang. Außerdem ermöglicht die bekannte Lösung nur eine mittelbare und näherungsweise Ermittlung, wann der Filterwechsel erforderlich ist. Lässt der Benutzer den Ventilator beispielsweise stets in der niedrigsten Leistungsstufe laufen, dann erfolgt keine Entladung der elektrischen Zelle und somit quasi nie eine Aufforderung zum Filterwechsel. Durch den aufsteigenden Wrasen kommt es gerade in einem Fall, in dem der Benutzer die Ventilatorleistung zu gering einstellt, zu einer erheblichen Verschmutzung im unteren Bereich des Filters. Somit ist es bei der bekannten Lösung stets erforderlich, dass der Benutzer die Ventilatorleistung in Bezug auf den momentanen Anteil von Fett und dergleichen im Wrasen richtig einstellt, was in der Praxis aber nicht im Allgemeinen funktionieren kann.

Zudem ist in der DE 10 2005 020 321 A1 eine Sättigungsanzeige für Filter einer Dunstabzugshaube offenbart. In der Dunstabzugshaube können zwei Filter vorgesehen sein, wobei einer ein Fettfilter, der beispielsweise aus Streckmetall bestehen kann, und der andere Filter ein Aktivkohlefilter sein kann. Das Erfassen des Sättigungsgrades kann dabei beispielsweise über das Zählen beziehungsweise Aufsummieren der Betriebsdauer der Dunstabzugshaube gegebenenfalls unter Berücksichtigung des Volumenstroms der Dunstabzugshaube erfolgen. Insbesondere sind ein Schalter, ein Zeitnehmer, eine Steuereinheit und damit verbundene Anzeigeeinheiten vorgesehen.

Die WO 2011/131421 A1 offenbart einen Filterlüfter mit einer Filtermattenüberwachungseinheit, mit der eine Einsatzdauer und/oder ein Verschmutzungsgrad der Filtermattenanordnung erfassbar ist. In einer Ausführungsform ist eine Verschmutzungssensorik vorgesehen. Die Sensorik kann ein elektrischer Feldsensor als kapazitiver Sensor oder ein elektrischer Leitfähigkeitssensor beziehungsweise Widerstandssensor als Strom- oder Spannungsmesssensor mit zum Beispiel beabstandeten Elektroden, die mit der Filtermatte in Kontakt gebracht sind, ausgestaltet sein. Weiterhin kann eine Kombination mindestens zweier dieser Sensoren in Betracht gezogen werden, wobei die Sensoren wiederum ein oder mehrere Sensorelemente aufweisen können, etwa der optische Sensor ein Lichtsende- und ein Lichtempfangselement oder der Leitfähigkeitssensor zwei beabstandete Elektroden, die mit der Filtermattenanordnung kontaktiert werden.

Die US 4,400,971 A offenbart einen Partikelabscheider und Filter, die verwendet werden, um Partikel aus Abgasen, die durch Verbrennung und andere industrielle Verfahren entstehen, zu entfernen. Zudem werden Aufbauten und Verfahren zum Messen der Menge von Partikeln, die an dem Filter anhaften, bei Betriebsbedingungen beschrieben. Insbesondere wird ein Gewebefiltermodul beschrieben, das erste leitfähige Mittel mit Gewebefiltermaterial, das an dem ersten leitfähigen Mittel angebracht ist, einem zweiten leitfähigen Mittel, das zu dem ersten leitfähigen Mittel beabstandet ist, und Mittel, die die ersten und zweiten leitfähigen Mittel elektrisch kontaktieren, wodurch eine Kapazität zwischen den ersten und zweiten leitfähigen Mitteln bestimmt werden kann, aufweist. Die leitfähigen Mittel können Elektroden darstellen, die durch isolierendes Material voneinander getrennt sind.

Schließlich offenbart DE 10 2007 016542 A1 eine Filteranordnung mit drei elektrisch leitenden Lagen.

### Darstellung der Erfindung

Aufgabe der Erfindung ist es, eine Anordnung mit einem Filter und einer Auswertevorrichtung zu schaffen, die eine verbesserte Bedienbarkeit beziehungsweise einen verbesserten Nutzen für einen Benutzer ermöglicht. Speziell ist es eine Aufgabe der Erfindung, eine Anordnung mit einem Filter und einer Auswertevorrichtung anzugeben, die eine verbesserte Bestimmung für einen erforderlichen Filterwechsel beziehungsweise eine Filterreinigung ermöglicht.

Die Aufgabe wird durch eine Anordnung mit einem Filter, die insbesondere als eine Dunstabzugsvorrichtung dient, gelöst, wobei das Filter eine erste elektrisch leitende Lage, zumindest eine zweite elektrisch leitende Lage und zumindest eine zwischen der ersten Lage und der zweiten Lage angeordnete Filterlage aufweist, wobei der Filter zumindest eine dritte elektrisch leitende Lage aufweist. Die Anordnung ist dadurch gekennzeichnet, dass die Anordnung eine Auswertevorrichtung aufweist, dass die erste Lage gegenüber der Filterlage und gegenüber der zweiten Lage elektrisch isoliert ist, wobei die zweite Lage gegenüber der Filterlage elektrisch isoliert ist, dass die Auswertevorrichtung zumindest eine Kapazitätsmesseinrichtung aufweist, die mit der ersten Lage und der zweiten Lage elektrisch verbunden ist, dass die dritte Lage gegenüber der ersten Lage und gegenüber der zweiten Lage und gegenüber der Filterlage elektrisch isoliert ist, dass die Auswertevorrichtung zumindest eine weitere Kapazitätsmesseinrichtung aufweist und dass die weitere Kapazitätsmesseinrichtung mit der ersten Lage und der dritten Lage elektrisch verbunden ist.

Durch die in den Unteransprüchen aufgeführten Maßnahmen sind vorteilhafte Weiterbildungen der erfindungsgemäßen Anordnung mit dem Filter und der Auswertevorrichtung möglich.

In vorteilhafter Weise sind zwischen der ersten Lage und der zweiten Lage mehrere Filterlagen vorgesehen, wobei die erste Lage gegenüber den Filterlagen elektrisch isoliert ist und wobei die zweite Lage ebenfalls gegenüber den Filterlagen elektrisch isoliert ist. Hierbei sind die erste elektrisch leitende Lage und die zweite elektrisch leitende Lage nicht notwendigerweise an den Außenseiten des Filters angeordnet. Möglich ist es auch, dass die erste Lage und die zweite Lage innerhalb des Filters vorgesehen sind, so dass die Auswertevorrichtung die Kapazität in Bezug auf einen Teilbereich des Filters misst. Hierdurch kann eine selektive, insbesondere bereichsweise oder lokale, Messung erfolgen. Hierdurch ist eine Anpassung an unterschiedliche Anwendungsfälle möglich.

Die Auswertevorrichtung ermöglicht in vorteilhafter Weise eine Erfassung der tatsächlichen Filterverschmutzung. Hierdurch ist eine direkte Filterzustandserkennung möglich. Die beiden elektrisch leitenden Lagen mit den dazwischen angeordneten Filterlagen entsprechen dem Aufbau eines Kondensators. Im sauberen Zustand befinden sich zwischen den beiden elektrisch leitenden Lagen nur die Filterlagen und Luft. Luft besitzt nur eine geringe Permittivitätszahl. Lagert sich nun Fett in den Filterlagen zwischen den beiden elektrisch leitenden Lagen ein, dann erhöht sich die Kapazität, da Fett eine höhere Permittivitätszahl als Luft hat. Die Kapazitätsmesseinrichtung erfasst beispielsweise in gewissen Zeitabständen die Kapazität, so dass die Auswertevorrichtung aus der gemessenen Kapazität auf den momentanen und tatsächlichen Zustand des Filters schließen kann.

In vorteilhafter Weise ist die erste Lage an einer ersten Außenseite des Filters angeordnet. Ferner ist es vorteilhaft, dass die zweite Lage an einer zweiten Außenseite des Filters angeordnet ist. Die erste Außenseite des Filters und die zweite Außenseite des Filters sind hierbei voneinander abgewandt. Hierdurch kann die Kapazität des Filters über die gesamte Anzahl an dazwischen angeordneten Filterlagen gemessen werden. Die erste Lage und die zweite Lage erstrecken sich hierbei nicht notwendigerweise über die gesamte jeweilige Außenseite.

Vorteilhaft ist es auch, dass die erste Lage als gitterförmige Platte ausgestaltet ist und/oder dass die zweite Lage als gitterförmige Platte ausgestaltet ist und/oder dass die Filterlagen als gitterförmige Platten ausgestaltet sind. Vorteilhaft ist es auch, dass die erste Lage aus einem Streckmetall gebildet ist und/oder dass die zweite Lage aus einem Streckmetall gebildet ist und/oder dass die Filterlagen aus Streckmetallen gebildet sind. Durch Streckmetalle (Streckmetallplatten) kann ein vorteilhafter Aufbau des Filters erzielt werden, der sich insbesondere für den Hausgebrauch eignet. Hierbei ist eine Reinigung des Filters durch Reinigen in einer Spülmaschine möglich. Nach der Reinigung des Filters genügt es, wenn der Benutzer das Filter wieder einbaut. Die Auswertevorrichtung erkennt dann den Zustand des Filters nach der Reinigung über die gemessene Kapazität. Durch die Reinigung nicht entfernte Verschmutzungen, das heißt eine gewisse Anfangsverschmutzung, wird hierbei ebenfalls erfasst, hat aber keinen Einfluss auf die zuverlässige Erkennung des Verschmutzungsgrades zu späteren Zeitpunkten. Speziell ist die Aufnahmekapazität des Filters zum Aufnehmen von Fettteilchen und dergleichen durch die Anfangsverschmutzung zwar verringert, der Zeitpunkt zum erneuten Reinigen des Filters wird aber zuverlässig erkannt, da fortan die aktuelle Verschmutzung erfasst wird. Gegebenenfalls kann der Benutzer auch auf eine unzureichende Reinigung des Filters hingewiesen werden, so dass dieser die Reinigung des Filters wiederholt.

Die Filterlagen können aus einem Metall gebildet sein, so dass diese elektrisch leitend sind. Dies ist aber nicht notwendigerweise erforderlich. Die Filterlagen können auch aus anderen Materialien gebildet sein, insbesondere aus Kunststoff.

Erfindungsgemäß ist die Anordnung dadurch gekennzeichnet, dass das Filter zumindest eine dritte elektrisch leitende Lage aufweist, dass die dritte Lage gegenüber der ersten Lage und gegenüber der zweiten Lage und gegenüber den Filterlagen elektrisch isoliert ist, dass die Auswertevorrichtung eine weitere Kapazitätsmesseinrichtung aufweist und dass die weitere Kapazitätsmesseinrichtung mit der ersten Lage und der dritten Lage elektrisch verbunden ist. Hierbei ist es außerdem von Vorteil, dass die zweite Lage und die dritte Lage nebeneinander an einer Außenseite des Filters angeordnet sind. Auf diese Weise kann die Verschmutzung des Filters lokal erfasst werden. Hierdurch können lokal unterschiedliche Verschmutzungen erkannt werden. Beispielsweise kann die eine Hälfte des Filters über einer ersten Kochstelle angeordnet sein und die zweite Hälfte des Filters kann über einer anderen Kochstelle angeordnet sein. Durch geeignete Aufteilung der zweiten Lage und der dritten Lage auf beispielsweise jeweils die Hälfte des Filters kann eine gewisse Zuordnung bezüglich der Kochstellen erfolgen. Falls hauptsächlich eine der Kochstellen von dem Benutzer genutzt wird, dann kann sich das Filter lokal stärker zusetzen. Um eine ausreichende Abzugswirkung für den beim Kochen entstehenden Wrasen zu erzielen und aus hygienischen Gründen kann die Auswertevorrichtung dann bereits bei einer gewissen lokalen Verschmutzung eine Reinigung des Filters empfehlen. Eine ähnliche Situation besteht bei einer Dunstabzugshaube mit Auszug, bei der sich mehrere, insbesondere zwei Filter, je nach Auszugsstellung teilweise überlappen. Hierbei kann eine lokale Erfassung sinnvoll sein.

Erfindungsgemäß ist es allerdings auch vorgesehen, dass das Filter zumindest eine dritte elektrisch leitende Lage aufweist, dass die dritte Lage gegenüber der ersten Lage und gegenüber der zweiten Lage und gegenüber den Filterlagen elektrisch isoliert ist, dass die zweite Lage zwischen der ersten Lage und der dritten Lage angeordnet ist, dass die Auswerteeinrichtung eine weitere Kapazitätsmesseinrichtung aufweist und dass die weitere Kapazitätsmesseinrichtung mit der zweiten Lage und der dritten Lage elektrisch verbunden ist. Hierbei ist es ferner vorteilhaft, dass zwischen der zweiten Lage und der dritten Lage zumindest eine Filterlage angeordnet ist und dass die dritte Lage an einer unterliegenden Außenseite des Filters angeordnet ist. Somit kann eine bereichsweise Erfassung der Verschmutzung des Filters erfolgen. Speziell kann ein unterer Bereich des Filters schneller verschmutzen als ein oberer Bereich. Falls die Aufnahmekapazität des unten liegenden Bereichs des Filters erschöpft ist, dann kann die Auswertevorrichtung anzeigen, dass das Filter zu wechseln ist. Dies ist aus hygienischen und auch optischen Gründen von Vorteil. Im Extremfall kann verhindert werden, dass Fette aus den unteren Filterlagen herabtropfen.

Möglich ist es auch, dass sowohl eine flächenmäßig lokale Aufteilung als auch eine bereichsweise Aufteilung über die Filterlagen vorgesehen ist. Je nach Ausgestaltung des Filters können hierbei weitere Lagen, insbesondere eine vierte elektrisch leitende Lage und eine fünfte elektrisch leitende Lage, in dem Filter vorgesehen sein. Ferner ist eine geeignete Anzahl von Kapazitätsmesseinrichtungen der Auswertevorrichtung vorgesehen, um die jeweilige Kapazität des im Filter gebildeten Kondensators zu messen.

In vorteilhafter Weise umfasst die Auswertevorrichtung eine Recheneinheit, wobei die Recheneinheit ausgestaltet ist, in Abhängigkeit von einer von der Kapazitätsmesseinrichtung gemessenen elektrischen Kapazität zwischen der ersten Lage und der zweiten Lage eine Verschmutzung beziehungsweise eine verbleibende Aufnahmekapazität der Filterplatten zwischen der ersten Lage und der zweiten Lage zu bestimmen. Vorteilhaft ist es auch, dass die Recheneinheit ausgestaltet ist, einen relativen Verschmutzungsgrad beziehungsweise eine verbleibende relative Aufnahmekapazität aus der gemessenen Kapazität in Bezug auf eine Ausgangskapazität zu bestimmen. Ferner ist es vorteilhaft, dass die Recheneinheit ausgestaltet ist, die Verschmutzung beziehungsweise die verbleibende Aufnahmekapazität in einer Masseneinheit und/oder einer Mengeneinheit zu bestimmen. Ein relativer Verschmutzungsgrad beziehungsweise eine verbleibende relative Aufnahmekapazität kann beispielsweise in Prozent ausgedrückt werden. Hierbei ist eine optische Anzeige denkbar, die diese Prozentzahl auf zwei Stellen ausgibt. Bei der Bestimmung der Verschmutzung in Masseeinheiten oder Mengeneinheiten kann beispielsweise eine Angabe in Gramm erfolgen. Möglich ist auch eine dimensionslose Bestimmung der Menge durch einen Absolutwert, der sich aus der gemessenen Kapazität bestimmt. Falls mehrere Kapazitätsmesseinrichtungen vorgesehen sind, dann kann die Auswertevorrichtung den Maximalwert der gemessenen Kapazitäten beziehungsweise den Maximalwert der bestimmten relativen Verschmutzungsgrade beziehungsweise den Minimalwert der verbleibenden relativen Aufnahmekapazitäten für die Anzeige zugrunde legen. Hierdurch wird durch einen ausreichend frühen Austausch beziehungsweise eine ausreichend frühe Reinigung des Filters eine lokal oder bereichsweise übermäßige Verschmutzung des Filters vermieden.

Vorteilhaft ist es, dass die erste Lage als metallische Filterlage ausgestaltet ist und/oder dass die zweite Lage als metallische Filterlage ausgestaltet ist. Auch weitere elektrisch leitende Lagen können als metallische Filterlagen ausgestaltet sein. Hierdurch tragen die elektrisch leitenden Lagen neben ihrer Funktion für die Kapazitätsmessung auch zur Filterwirkung bei.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
- Fig. 1: eine Anordnung mit einem Filter und einer Auswertevorrichtung in einer auszugsweisen, schematischen Schnittdarstellung entsprechend einem ersten Beispiel, das nicht Teil der Erfindung ist;
- Fig. 2: das in Fig. 1 dargestellte Filter mit der Auswertevorrichtung entsprechend einem ersten Ausführungsbeispiel der Erfindung und
- Fig. 3: das in Fig. 1 dargestellte Filter mit der Auswertevorrichtung entsprechend einem zweiten Ausführungsbeispiel der Erfindung.

### Bevorzugte Ausführungsformen der Erfindung

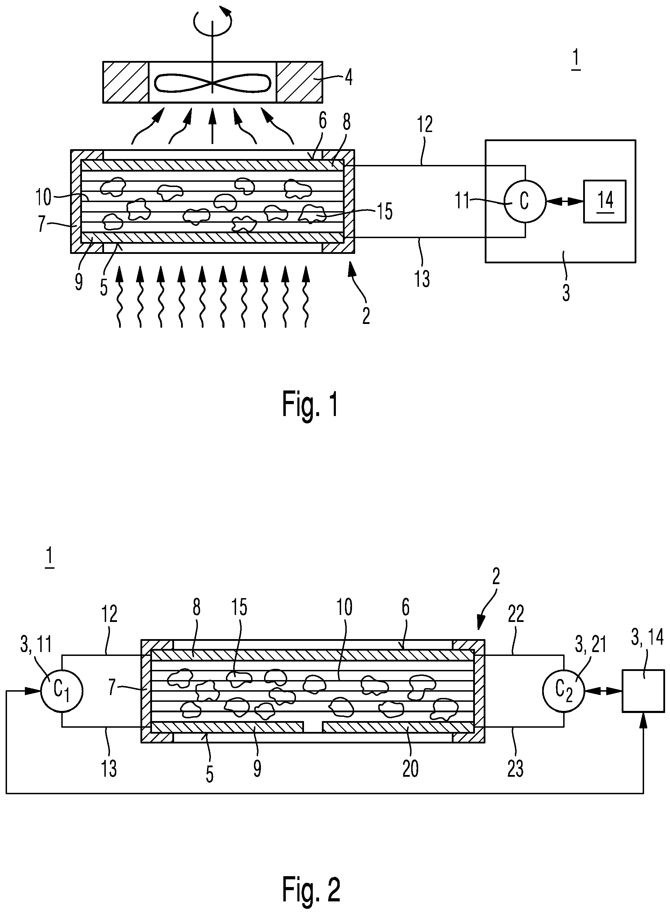

Fig. 1 zeigt eine Anordnung 1 mit einem Filter 2 und einer Auswertevorrichtung 3 in einer auszugsweisen, schematischen Schnittdarstellung entsprechend einem ersten Beispiel, das nicht Teil der Erfindung ist. Das Filter 2 mit der Auswertevorrichtung 3 kann insbesondere für eine Dunstabzugsvorrichtung dienen. Speziell eignet sich das Filter 2 mit der Auswertevorrichtung 3 für Elektroherde oder gasbetriebene Herde, wie sie in Privathaushalten zum Einsatz kommen. Die Anordnung 1 mit dem Filter 2 und der Auswertevorrichtung 3 der Erfindung eignet sich allerdings auch für andere Anwendungsfälle.

In diesem Beispiel weist die Anordnung 1 ein oberhalb des Filters 2 angeordnetes Gebläse 4 auf, das einen Luftstrom durch den Filter 2 erzeugt. Hierbei wird an einer Außenseite 5 des Filters 2, die in diesem Beispiel eine Unterseite 5 des Filters 2 ist, Luft angesaugt. Hierdurch wird beispielsweise beim Kochen ein Wrasen angesaugt, der durch das Filter 2 gefiltert wird. An einer weiteren Außenseite 6 des Filters 2, die in diesem Beispiel eine Oberseite 6 des Filters 2 ist, tritt der gefilterte Luftstrom aus dem Filter 2 aus und wird beispielsweise über ein Absaugrohr ins Freie geleitet.

Das Filter 2 weist ein Kunststoffgehäuse 7 auf, das an der Außenseite 6 eine erste elektrisch leitende Lage 8 und an der Außenseite 5 eine zweite elektrisch leitende Lage 9 umfasst. Zwischen den Lagen 8, 9 sind mehrere Filterlagen 10 angeordnet, von denen zur Vereinfachung der Darstellung in der Fig. 1 nur die Filterlage 10 gekennzeichnet ist. Die erste Lage 8 ist gegenüber den Filterlagen 10 und gegenüber der zweiten Lage 9 elektrisch isoliert. Ferner ist auch die zweite Lage 9 gegenüber den Filterlagen 10 elektrisch isoliert. Die elektrische Isolation kann beispielsweise durch eine Beschichtung mit einem Lack erfolgen.

Die Auswertevorrichtung 3 weist eine Kapazitätsmesseinrichtung 11 auf, die über elektrische Leitungen 12, 13 elektrisch mit der ersten Lage 8 und der zweiten Lage 9 verbunden ist. Die erste Lage 8 und die zweite Lage 9 bilden zusammen mit dem Zwischenraum, in dem die Filterlagen 10 angeordnet sind, eine Anordnung in Form eines Kondensators. Im Ausgangszustand, das heißt im sauberen, fabrikneuen Zustand, befindet sich zwischen den Lagen 8, 9 außer den Filterlagen 10 Luft. Im Betrieb lagert sich aus dem Wrasen Fett und dergleichen in den Filterlagen 10 ab. Da Fett eine höhere Permittivitätszahl als Luft besitzt, erhöht sich die Kapazität, die von der Kapazitätsmesseinrichtung 11 gemessen wird. Die von der Kapazitätsmesseinrichtung 11 gemessene Kapazität wird an eine Recheneinheit 14 ausgegeben. Hierbei kann die Recheneinheit 14 beispielsweise in gewissen Zeitabständen eine Kapazitätsmessung durch die Kapazitätsmesseinrichtung 11 befehlen.

In diesem Beispiel ist die erste Lage 8 an der Außenseite 6 angeordnet und die zweite Lage 9 ist an der Außenseite 5 angeordnet. Außerdem erstrecken sich die beiden Lagen 8, 9 jeweils über die gesamte Außenseite 6 beziehungsweise Außenseite 5. Hierdurch wird die gesamte Kapazität des Filters 2 gemessen. Die von der Recheneinheit 4 aufgrund der gemessenen Kapazität bestimmte Verschmutzung des Filters 2 stellt somit eine Gesamtverschmutzung des Filters 2 dar.

Die Lagen 8, 9 sind jeweils aus einem Streckmetall in Form von gitterförmigen Platten ausgestaltet. Ferner sind auch die Filterlagen 10 aus Streckmetallen in Form von gitterförmigen Platten ausgestaltet. Verschmutzungen in Form von Fettteilchen 15 sammeln sich in den Filterlagen 10. Hierbei ist zur Veranschaulichung eines der Fettteilchen 15 gekennzeichnet.

Fig. 2 zeigt die in Fig. 1 dargestellte Anordnung 1 mit dem Filter 2 und der Auswerteeinrichtung 3. In diesem Ausführungsbeispiel ist eine dritte Lage 20 vorgesehen, die neben der zweiten Lage 9 an der Außenseite 5 des Filters 2 angeordnet ist. Die dritte Lage 20 ist hierbei gegenüber der zweiten Lage 9, gegenüber der ersten Lage 8 und gegenüber den Filterlagen 10 elektrisch isoliert. Die zweite Lage 9 bildet mit der ersten Lage 8 und den dazwischen angeordneten Filterlagen 10 eine Kondensatoranordnung, deren Kapazität über die Kapazitätsmesseinrichtung 11 messbar ist. Ferner bildet die dritte Lage 20 mit der ersten Lage 8 und den dazwischen angeordneten Filterlagen 10 eine weitere Kondensatoranordnung, deren Kapazität über eine weitere Kapazitätsmesseinrichtung 21 messbar ist. Hierbei ist die erste Lage 8 über eine elektrische Leitung 22 mit der Kapazitätsmesseinrichtung 21 verbunden. Die dritte Lage 20 ist über eine elektrische Leitung 23 mit der weiteren Kapazitätsmesseinrichtung 21 verbunden.

In diesem Ausführungsbeispiel können lokal unterschiedliche Verschmutzungen des Filters 2 bestimmt werden. Beispielsweise kann sich zwischen der ersten Lage 8 und der zweiten Lage 9 eine größere Verschmutzung des Filters 2 ergeben als zwischen der ersten Lage 8 und der dritten Lage 20. Dies ist durch eine größere Anzahl an Fettteilchen 15 in der in der Fig. 2 dargestellten linken Seite des Filters 2 veranschaulicht. Dementsprechend ist auch die gemessene Kapazität C₁ der Kondensatoranordnung mit der zweiten Lage 9 größer als die gemessene Kapazität C₂ der Kondensatoranordnung mit der dritten Lage 20. Die gemessenen Kapazitäten C₁ und C₂ werden an die Recheneinheit 14 übermittelt. Beispielsweise kann die Recheneinheit 14 den Maximalwert der gemessenen Kapazitäten C₁ und C₂ ermitteln, der in diesem Ausführungsbeispiel durch die Kapazität C₁ gegeben ist. Hierdurch kann eine erforderliche Reinigung oder ein erforderlicher Austausch des Filters 2 bereits angezeigt werden, wenn die Verschmutzung entweder des in der Fig. 2 dargestellten linken Teils des Filters 2 oder des in der Fig. 2 dargestellten rechten Teils des Filters 2 einen vorgegebenen Schwellwert überschreitet. Somit kann anstelle einer Überwachung des gesamten Volumens des Filters 2 auch eine Aufteilung in mehrere zu überwachende Flächen beziehungsweise Bereiche vorgenommen werden. Dies kann beispielsweise genutzt werden, um schräg oder senkrecht eingebaute Filter 2 zu überwachen, bei denen die elektrische Kapazität der weiter unten liegenden Bereiche detektiert wird, da sich hier bevorzugt das Fett sammelt.

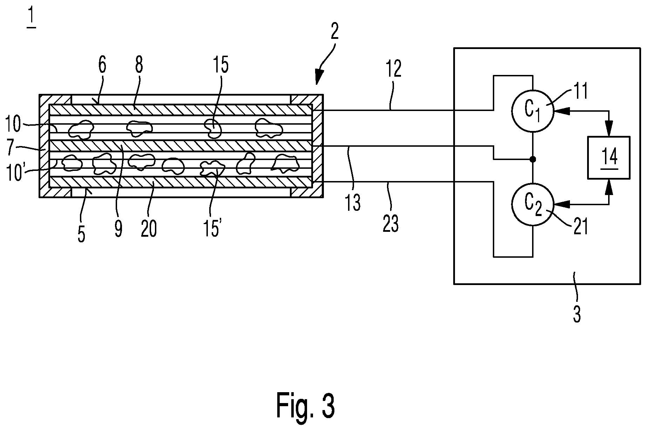

Fig. 3 zeigt die in Fig. 1 dargestellte Anordnung 1 mit einem Filter 2 und einer Auswertevorrichtung 3 entsprechend einem zweiten Ausführungsbeispiel. In diesem Ausführungsbeispiel wird die Kapazität zwischen der ersten Lage 8 und der zweiten Lage 9 über die Kapazitätsmesseinrichtung 11 gemessen, die über die elektrischen Leitungen 12, 13 mit den Lagen 8, 9 elektrisch verbunden ist. Außerdem wird die Kapazität zwischen der zweiten Lage 9 und der dritten Lage 20 über die weitere Kapazitätsmesseinrichtung 21 gemessen, die über die elektrischen Leitungen 13, 23 mit der zweiten Lage 9 und der dritten Lage 20 verbunden ist. In diesem Ausführungsbeispiel liegt die zweite Lage 9 hierbei zwischen der ersten Lage 8 und der dritten Lage 20. Zwischen der ersten Lage 8 und der zweiten Lage 9 sind vorzugsweise mehrere Filterlagen 10 angeordnet. Außerdem sind zwischen der zweiten Lage 9 und der dritten Lage 20 vorzugsweise mehrere Filterlagen 10' angeordnet. Die erste Lage 8 befindet sich an der Außenseite 6. Die dritte Lage 20 befindet sich an der Außenseite 5.

In diesem Ausführungsbeispiel kann in einem Fall, in dem die Verschmutzung des Filters 2 beispielsweise oben weniger stark ausgeprägt ist als unten ein rechtzeitiger Austausch beziehungsweise eine Reinigung des Filters 2 erfolgen. Im oberen Bereich ist eines der Fettteilchen 15 gekennzeichnet. Außerdem ist im unteren Bereich ein weiteres Fettteilchen 15' gekennzeichnet. In der Fig. 3 ist schematisch veranschaulicht, dass sich im unteren Bereich mehr Fettteilchen 15' ansammeln als sich Fettteilchen 15 im oberen Bereich ansammeln. Dementsprechend ist die maximal zulässige Verschmutzung, die geeignet vorgegeben ist, in diesem Fall unten schneller erreicht. Die Kapazität C₁ im oberen Bereich wird durch die Kapazitätsmesseinrichtung 11 bestimmt. Die Kapazität C₂ im unteren Bereich wird durch die Kapazitätsmesseinrichtung 21 bestimmt. Die beiden gemessenen Kapazitäten C₁ und C₂ werden von der Recheneinheit 14 weiterverarbeitet. Hierbei kann die Recheneinheit 14 den Maximalwert der beiden Kapazitäten C₁ und C₂ bestimmen, der in diesem Ausführungsbeispiel gleich der Kapazität C₂ ist. Möglich ist es auch, dass die Kapazitäten C₁ und C₂ zunächst in andere Größen umgerechnet werden, die dann weiterverarbeitet werden. Dies ist bei unsymmetrischen Ausgestaltungen der Kondensatoranordnungen und/oder bei unterschiedlich dimensionierten Kondensatoranordnungen von Vorteil.

Die Recheneinheit 14 der beschriebenen Ausführungsbeispiele kann den Verschmutzungsgrad oder eine verbleibende Aufnahmekapazität für Schmutzpartikel, insbesondere Fettteilchen 15, berechnen und ausgeben. Speziell kann ein relativer Verschmutzungsgrad beziehungsweise eine verbleibende relative Aufnahmekapazität für Schmutzteilchen bestimmt werden. Ferner können die Verschmutzung beziehungsweise die verbleibende Aufnahmekapazität auch in einer Masseneinheit, einer Mengeneinheit oder einer dimensionslosen Größe ausgegeben werden. Beispielsweise ist eine Umrechnung in Gramm-Angaben möglich. Hierbei kann die Genauigkeit der Erfassung und der Auswertung so hoch sein, dass selbst kleine Änderungen der Verschmutzung für den Benutzer sichtbar werden. Hierdurch kann der Benutzer die Wirkung des Filters 2 beobachten.

Somit ergibt sich gegenüber einer zeitbasierten Lösung der Vorteil, dass die tatsächliche Verschmutzung des Filters 2 bestimmt wird. Daher kann auch jederzeit der Filterzustand von der Auswertevorrichtung 3 ausgelesen werden. Ebenso kann eine dauerhafte Verschmutzung des Filters 2, beispielsweise durch Verharzung des Fettes, erfasst werden, da die elektrische Kapazität im sauberen Zustand bekannt ist und somit ein Vergleich eines gereinigten Filters 2 mit dem Ausgangszustand möglich ist. Hierdurch kann der Benutzer auch den Hinweis erhalten, dass ein Austausch des Filters 2 durch ein neues Filter 2 sinnvoll oder erforderlich ist.

Vorzugsweise sind die elektrisch leitenden Lagen 8, 9, 20 selbst als Filterlagen 8, 9, 20, insbesondere metallische Filterlagen 8, 9, 20, ausgestaltet.

Die Erfindung ist nicht auf die beschriebenen Ausführungsbeispiele beschränkt. Stattdessen wird der Umfang der Erfindung durch die Ansprüche definiert.

### Bezugszeichenliste

- 1: Anordnung
- 2: Filter
- 3: Auswertevorrichtung
- 4: Gebläse
- 5, 6: Außenseite
- 7: Kunststoffgehäuse
- 8: erste Lage
- 9: zweite Lage
- 10: Filterlage
- 11: Kapazitätsmesseinrichtung
- 12, 13: elektrische Leitung
- 14: Recheneinheit
- 15: Fettteilchen
- 20: dritte Lage
- 21: weitere Kapazitätsmesseinrichtung
- 22, 23: elektrische Leitung

## Patentansprüche

1. Anordnung (1) mit einem Filter (2), insbesondere Dunstabzugsvorrichtung, wobei das Filter (2) eine erste elektrisch leitende Lage (8), zumindest eine zweite elektrisch leitende Lage (9) und zumindest eine zwischen der ersten Lage (8) und der zweiten Lage (9) angeordnete Filterlage (10) aufweist, wobei das Filter (2) zumindest eine dritte elektrisch leitende Lage (20) aufweist, **dadurch gekennzeichnet, dass** die Anordnung (1) eine Auswertevorrichtung (3) aufweist, dass die erste Lage (8) gegenüber der Filterlage (10) und gegenüber der zweiten Lage (9) elektrisch isoliert ist, wobei die zweite Lage (9) gegenüber der Filterlage (10) elektrisch isoliert ist und wobei die Auswertevorrichtung (3) zumindest eine Kapazitätsmesseinrichtung (11) aufweist, die mit der ersten Lage (8) und der zweiten Lage (9) elektrisch verbunden ist, dass die dritte Lage (20) gegenüber der ersten Lage (8) und gegenüber der zweiten Lage (9) und gegenüber der Filterlage (10) elektrisch isoliert ist, dass die Auswertevorrichtung (3) zumindest eine weitere Kapazitätsmesseinrichtung (21) aufweist und dass die weitere Kapazitätsmesseinrichtung (21) mit der ersten Lage (8) und der dritten Lage (20) elektrisch verbunden ist.

2. Anordnung nach Anspruch 1, **dadurch gekennzeichnet, dass** zwischen der ersten Lage (8) und der zweiten Lage (9) mehrere Filterlagen (10) vorgesehen sind, dass die erste Lage (8) gegenüber den Filterlagen (10) elektrisch isoliert ist und dass die zweite Lage (9) gegenüber den Filterlagen (10) elektrisch isoliert ist.

3. Anordnung nach Anspruch 1 oder 2, **dadurch gekennzeichnet, dass** die erste Lage (8) an einer ersten Außenseite (6) des Filters (2) angeordnet ist und/oder dass die zweite Lage (9) an einer zweiten Außenseite (5) des Filters (2) angeordnet ist.

4. Anordnung nach einem der Ansprüche 1 bis 3, **dadurch gekennzeichnet, dass** die erste Lage (8) als gitterförmige Platte ausgestaltet ist und/oder dass die zweite Lage (9) als gitterförmige Platte ausgestaltet ist und/oder dass die Filterlagen (10) als gitterförmige Platten ausgestaltet sind
und/oder
dass die erste Lage (8) aus einem Streckmetall gebildet ist und/oder dass die zweite Lage (9) aus einem Streckmetall gebildet ist und/oder dass die Filterlagen (10) aus Streckmetallen gebildet sind.

5. Anordnung nach einem der Ansprüche 1 bis 4, **dadurch gekennzeichnet, dass** die zweite Lage (9) und die dritte Lage (20) nebeneinander an einer Außenseite (5) des Filters (2) angeordnet sind.

6. Anordnung nach einem der Ansprüche 1 bis 5, **dadurch gekennzeichnet, dass** das Filter (2) zumindest eine dritte elektrisch leitende Lage (20) aufweist, dass die dritte Lage (20) gegenüber der ersten Lage (8) und gegenüber der zweiten Lage (9) und gegenüber den Filterlagen (10) elektrisch isoliert ist, dass die zweite Lage (9) zwischen der ersten Lage (8) und der dritten Lage (20) angeordnet ist, dass die Auswertevorrichtung (3) eine weitere Kapazitätsmesseinrichtung (21) aufweist und dass die weitere Kapazitätsmesseinrichtung (21) mit der zweiten Lage (9) und der dritten Lage (20) elektrisch verbunden ist.

7. Anordnung nach Anspruch 6, **dadurch gekennzeichnet, dass** zwischen der zweiten Lage (9) und der dritten Lage (20) zumindest eine Filterlage (10') angeordnet ist und dass die dritte Lage (20) an einer Außenseite (5) des Filters (2) angeordnet ist.

8. Anordnung nach einem der Ansprüche 1 bis 7, **dadurch gekennzeichnet, dass** die Auswertevorrichtung (3) eine Recheneinheit (14) aufweist, dass die Recheneinheit (14) ausgestaltet ist, in Abhängigkeit von einer von der Kapazitätsmesseinrichtung (11) gemessenen elektrischen Kapazität zwischen der ersten Lage (8) und der zweiten Lage (9) eine Verschmutzung beziehungsweise eine verbleibende Aufnahmekapazität der Filterlagen (10) zwischen der ersten Lage (8) und der zweiten Lage (9) zu bestimmen.

9. Anordnung nach Anspruch 8, **dadurch gekennzeichnet, dass** die Recheneinheit (14) ausgestaltet ist, einen relativen Verschmutzungsgrad beziehungsweise eine verbleibende relative Aufnahmekapazität aus der gemessenen Kapazität in Bezug auf eine Ausgangskapazität zu bestimmen
und/oder
dass die Recheneinheit (14) ausgestaltet ist, die Verschmutzung beziehungsweise die verbleibende Aufnahmekapazität in einer Masseneinheit und/oder einer Mengeneinheit zu bestimmen.

10. Anordnung nach einem der Ansprüche 1 bis 9, **dadurch gekennzeichnet, dass** zumindest eine elektrisch leitende Lage (8, 9, 20) als metallische Filterlage (8, 9, 20) ausgestaltet ist.

## Claims

1. Arrangement (1) with a filter (2), in particular extractor device, wherein the filter (2) has a first electrically conducting layer (8), at least one second electrically conducting layer (9) and at least one filter layer (10) arranged between the first layer (8) and the second layer (9), wherein the filter (2) has at least one third electrically conducting layer (20), **characterised in that** the arrangement (1) has an evaluation device (3), that the first layer (8) is electrically isolated from the filter layer (10) and from the second layer (9), wherein the second layer (9) is electrically isolated from the filter layer (10) and wherein the evaluation device (3) has at least one capacitance measuring facility (11) which is electrically connected to the first layer (8) and the second layer (9), that the third layer (20) is electrically isolated from the first layer (8) and from the second layer (9) and from the filter layer (10), that the evaluation device (3) has at least one further capacitance measuring facility (21) and that the further capacitance measuring facility (21) is electrically connected to the first layer (8) and the third layer (20).

2. Arrangement according to claim 1, **characterised in that** a number of filter layers (10) are provided between the first layer (8) and the second layer (9), that the first layer (8) is electrically isolated from the filter layers (10) and that the second layer (9) is electrically isolated from the filter layers (10).

3. Arrangement according to claim 1 or 2, **characterised in that** the first layer (8) is arranged on a first outer face (6) of the filter (2) and/or that the second layer (9) is arranged on a second outer face (5) of the filter (2).

4. Arrangement according to one of claims 1 to 3, **characterised in that** the first layer (8) is designed as a mesh-type plate and/or that the second layer (9) is designed as a mesh-type plate and/or the filter layers (10) are designed as mesh-type plates and/or that the first layer (8) is formed from an expanded metal and/or that the second layer (9) is formed from an expanded metal and/or that the filter layers (10) are formed from expanded metals.

5. Arrangement according to one of claims 1 to 4, **characterised in that** the second layer (9) and the third layer (20) are arranged adjacent to one another on an outer face (5) of the filter (2).

6. Arrangement according to one of claims 1 to 5, **characterised in that** the filter (2) has at least one third electrically conducting layer (20), that the third layer (20) is electrically isolated from the first layer (8) and from the second layer (9) and from the filter layers (10), that the second layer (9) is arranged between the first layer (8) and the third layer (20), that the evaluation device (3) has a further capacitance measuring facility (21) and that the further capacitance measuring facility (21) is electrically connected to the second layer (9) and the third layer (20).

7. Arrangement according to claim 6, **characterised in that** at least one filter layer (10') is arranged between the second layer (9) and the third layer (20) and that the third layer (20) is arranged on an outer face (5) of the filter (2).

8. Arrangement according to one of claims 1 to 7, **characterised in that** the evaluation device (3) has a computer unit (14), that the computer unit (14) is designed to determine a contamination or a remaining absorption capacity of the filter layers (10) between the first layer (8) and the second layer (9) as a function of an electrical capacitance measured by the capacitance measuring device (11).

9. Arrangement according to claim 8, **characterised in that** the computer unit (14) is designed to determine a relative degree of contamination or a remaining relative absorption capacity from the measured capacitance in respect of an output capacitance
and/or
that the computer unit (14) is designed to determine the contamination or the remaining absorption capacity in a unit mass and/or a quantity unit.

10. Arrangement according to one of claims 1 to 9, **characterised in that** at least one electrically conducting layer (8, 9, 20) is designed as a metallic filter layer (8, 9, 20).

## Revendications

1. Agencement (1) comprenant un filtre (2), notamment dispositif d'évacuation de vapeur, le filtre (2) présentant une première couche (8) électroconductrice, au moins une deuxième couche (9) électroconductrice et au moins une couche filtrante (10) disposée entre la première couche (8) et la deuxième couche (9), le filtre (2) présentant au moins une troisième couche (20) électroconductrice, **caractérisé en ce que**
l'agencement (1) présente un dispositif d'évaluation (3), **en ce que** la première couche (8) est électriquement isolée par rapport à la couche filtrante (10) et par rapport à la deuxième couche (9), la deuxième couche (9) étant électriquement isolée par rapport à la couche filtrante (10), et le dispositif d'évaluation (3) présentant au moins un dispositif de mesure de capacité (11) qui est électriquement relié à la première couche (8) et à la deuxième couche (9),
**en ce que** la troisième couche (20) est électriquement isolée par rapport à la première couche (8) et par rapport à la deuxième couche (9) et par rapport à la couche filtrante (10), **en ce que** le dispositif d'évaluation (3) présente au moins un dispositif supplémentaire de mesure de capacité (21) et **en ce que** le dispositif supplémentaire de mesure de capacité (21) est électriquement relié à la première couche (8) et à la troisième couche (20).

2. Agencement selon la revendication 1, **caractérisé en ce que** plusieurs couches filtrantes (10) sont ménagées entre la première couche (8) et la deuxième couche (9), **en ce que** la première couche (8) est électriquement isolée par rapport aux couches filtrantes (10) et **en ce que** la deuxième couche (9) est électriquement isolée par rapport aux couches filtrantes (10).

3. Agencement selon la revendication 1 ou 2, **caractérisé en ce que** la première couche (8) est disposée sur un premier côté extérieur (6) du filtre (2) et/ou **en ce que** la deuxième couche (9) est disposée sur un deuxième côté extérieur (5) du filtre (2).

4. Agencement selon l'une quelconque des revendications 1 à 3, **caractérisé en ce que** la première couche (8) est réalisée comme plaque en forme de grille et/ou **en ce que** la deuxième couche (9) est réalisée comme plaque en forme de grille et/ou **en ce que** les couches filtrantes (10) sont réalisées comme plaques en forme de grille,
et/ou
**en ce que** la première couche (8) est formée à partir d'un métal déployé et/ou **en ce que** la deuxième couche (9) est formée à partir d'un métal déployé et/ou **en ce que** les couches filtrantes (10) sont formées à partir de métaux déployés.

5. Agencement selon l'une quelconque des revendications 1 à 4, **caractérisé en ce que** la deuxième couche (9) et la troisième couche (20) sont disposées l'une à côté de l'autre sur un côté extérieur (5) du filtre (2).

6. Agencement selon l'une quelconque des revendications 1 à 5, **caractérisé en ce que** le filtre (2) présente au moins une troisième couche (20) électroconductrice, **en ce que** la troisième couche (20) est électriquement isolée par rapport à la première couche (8) et par rapport à la deuxième couche (9) et par rapport aux couches filtrantes (10), **en ce que** la deuxième couche (9) est disposée entre la première couche (8) et la troisième couche (20), **en ce que** le dispositif d'évaluation (3) présente un dispositif supplémentaire de mesure de capacité (21) et **en ce que** le dispositif supplémentaire de mesure de capacité (21) est électriquement relié à la deuxième couche (9) et à la troisième couche (20).

7. Agencement selon la revendication 6, **caractérisé en ce qu'**au moins une couche filtrante (10') est disposée entre la deuxième couche (9) et la troisième couche (20) et **en ce que** la troisième couche (20) est disposée sur un côté extérieur (5) du filtre (2).

8. Agencement selon l'une quelconque des revendications 1 à 7, **caractérisé en ce que** le dispositif d'évaluation (3) présente une unité de calcul (14), **en ce que** l'unité de calcul (14) est conçue, en fonction d'une capacité électrique mesurée par le dispositif de mesure de capacité (11) entre la première couche (8) et la deuxième couche (9), pour déterminer un encrassement respectivement une capacité de réception résiduelle des couches filtrantes (10) entre la première couche (8) et la deuxième couche (9).

9. Agencement selon la revendication 8, **caractérisé en ce que** l'unité de calcul (14) est conçue pour déterminer un degré d'encrassement relatif, respectivement une capacité de réception relative résiduelle, à partir de la capacité mesurée par rapport à une capacité initiale,
et/ou
**en ce que** l'unité de calcul (14) est conçue pour déterminer l'encrassement respectivement la capacité de réception résiduelle dans une unité de masse et/ou une unité de quantité.

10. Agencement selon l'une quelconque des revendications 1 à 9, **caractérisé en ce qu'**au moins une couche (8, 9, 20) électroconductrice est conçue comme couche filtrante métallique (8, 9, 20).
